# EUROPEAN PATENT APPLICATION

(11) **EP 4 804 004 A1**
(43) Date of publication of application: **09.09.2026**
(21) Application number: 26162060.3
(22) Date of filing: 03.03.2026
(51) Int. Cl.: G06F 3/12, H04N 1/409

(54) **NON-TRANSITORY COMPUTER-READABLE STORAGE MEDIUM STORING PRINT CONTROL PROGRAM, INFORMATION PROCESSING APPARATUS, AND PRINT CONTROL METHOD**

(30) Priority: 04.03.2025 JP 2025033536
(71) Applicant: Seiko Epson Corporation, Tokyo 160-8801 (JP)
(72) Inventor: OISHI, Satoru, Suwa-shi 392-8502 (JP); MIYAJIMA, Motomu, Suwa-shi 392-8502 (JP); KUBO, Ryotaro, Suwa-shi 392-8502 (JP)
(74) Representative: Lewis Silkin LLP

(57) **Abstract**

A non-transitory computer-readable storage medium storing a print control program according to an aspect of the present disclosure stores a print control program for expanding an OS general-purpose printing program, which causes a computer to execute acquisition processing, conversion processing, and edge processing. In the acquisition processing, a spool file output from the OS general-purpose printing program is acquired. In the conversion processing, the spool file is converted into print image data in a raster format. The edge processing is executed on either the spool file acquired in the acquisition processing and to be subjected to the conversion processing or the print image data converted in the conversion processing.

## Description

The present application is based on, and claims priority from JP Application Serial Number 2025-033536, filed March 4, 2025, the disclosure of which is hereby incorporated by reference herein in its entirety.

### BACKGROUND

### 1. Technical Field

The present disclosure relates to a non-transitory computer-readable storage medium storing a print control program, an information processing apparatus, and a print control method.

### 2. Related Art

JP-A-2003-285453 describes a technique of reducing the amount of ink ejected to an edge region of image data to reduce print bleeding in printing.

However, a general-purpose printer driver such as an Operating System (OS) standard printer driver does not support edge processing as described above. Therefore, it is desirable to develop a technique that enables edge processing in an environment in which print processing is performed using a general-purpose printer driver. Note that the technique described in JP-A-2003-285453 is not a technique capable of solving such a problem.

### SUMMARY

A non-transitory computer-readable storage medium storing a print control program according to an aspect of the present disclosure stores a print control program for extending an OS general-purpose printing program, the print control program causing a computer to execute: acquisition processing of acquiring a spool file output from the OS general-purpose printing program; conversion processing of converting the spool file into print image data in a raster format; and edge processing, the edge processing being executed on either the spool file acquired in the acquisition processing and to be subjected to the conversion processing or the print image data converted in the conversion processing.

An information processing apparatus according to an aspect of the present disclosure including: an OS general-purpose printing program; an acquisition processing section that acquires a spool file output from the OS general-purpose printing program; a conversion processing section that converts the spool file into print image data in a raster format; and an edge processing section, the edge processing section executing edge processing on either the spool file acquired by the acquisition processing section and to be subjected to conversion processing by the conversion processing section or the print image data converted by the conversion processing section.

A print control method according to an aspect of the present disclosure including causing a computer provided with an OS general-purpose printing program to execute: acquisition processing of acquiring a spool file output from the OS general-purpose printing program; conversion processing of converting the spool file into print image data in a raster format; and edge processing, the edge processing being executed on either the spool file acquired in the acquisition processing and to be subjected to the conversion processing or the print image data converted in the conversion processing.

### BRIEF DESCRIPTION OF THE DRAWINGS

FIG. 1 is a block diagram illustrating a configuration example of a printing system including an information processing apparatus according to a first embodiment.
FIG. 2 is a flowchart for explaining a processing example of the information processing apparatus in the printing system of FIG. 1.
FIG. 3 is an overview block diagram for explaining a processing example in the printing system of FIG. 1.
FIG. 4 is a schematic diagram for explaining boundary detection processing in the processing example of FIG. 3.
FIG. 5 is a schematic diagram for explaining two examples of edge processing in the processing example of FIG. 3.
FIG. 6 is a diagram illustrating a print example before and after the edge processing is performed in the processing example of FIG. 3.
FIG. 7 is a flowchart for explaining another processing example in an information processing apparatus according to a second embodiment.
FIG. 8 is a schematic diagram for explaining a processing example in an information processing apparatus according to a third embodiment.
FIG. 9 is a diagram illustrating an example of a hardware configuration of an apparatus.

### DESCRIPTION OF EMBODIMENTS

Hereinafter, embodiments of the present disclosure will be described with reference to the drawings. The drawings are merely exemplary for explaining embodiments of the present disclosure. In addition, not all components described in the embodiments of the present disclosure are necessarily essential in the present disclosure.

### First Embodiment

### Configuration Example of System

An information processing apparatus according to the present embodiment is an apparatus that is connected to a printer and can provide an instruction to perform printing to the printer. This information processing apparatus constitutes a printing system together with the printer.

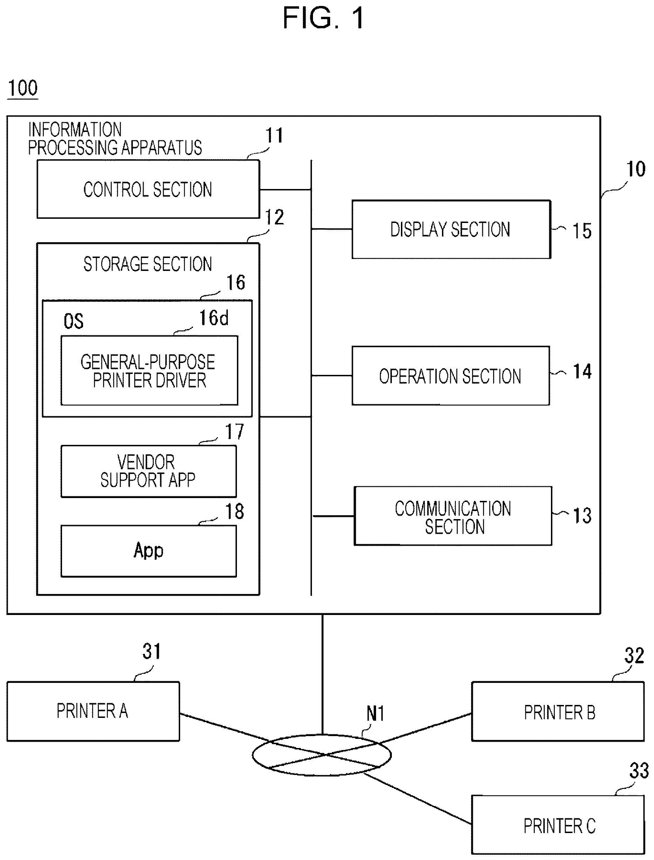

Hereinafter, a configuration example of the printing system including the information processing apparatus according to the present embodiment will be described with reference to FIG. 1. FIG. 1 is a block diagram illustrating the configuration example of the printing system according to the present embodiment.

As illustrated in FIG. 1, a printing system 100 according to the present embodiment can include an information processing apparatus 10, a printer A(31), a printer B(32), and a printer C(33).

The information processing apparatus 10 is a terminal apparatus having a communication function, such as a personal computer (PC), a smartphone, or a tablet terminal, and can be used by a user who desires to perform printing. The information processing apparatus 10 is connected to the printer A(31), the printer B(32), and the printer C(33) via a network N1 for processing of transmitting a print request and the like. Although not illustrated in the drawing, the printing system 100 can include a plurality of information processing apparatuses 10.

In a case where print data is received, all of the printer A(31), the printer B(32), and the printer C(33) can perform printing on a medium. Each printer produces a printed matter by performing printing.

The printing system 100 can perform printing by a printer selected from among the printer A(31), the printer B(32), and the printer C(33) by a user operation from the information processing apparatus 10.

In addition, although the printing system 100 is described on the assumption that the printing system 100 has a configuration including the three printers for convenience, it is only necessary for at least one printer to be included. Furthermore, each printer can also be referred to as a printing apparatus, an image forming apparatus, or a multifunction apparatus. Although it is only necessary for each printer to be an apparatus having a communication function and a printing function, each printer may be a multifunction apparatus having other functions such as a scanning function, a copying function, and a facsimile function. Note that the copying function is implemented by the scanning function and the printing function. In addition, a printing method in each printer is not limited, and various printing methods such as an ink jet printing method and a laser printing method, for example, are applicable.

Hereinafter, a configuration example of the information processing apparatus 10 will be described in detail. Note that description of a configuration example of each printer will be omitted.

### Configuration Example of Information Processing Apparatus 10

As illustrated in FIG. 1, the information processing apparatus 10 can include a control section 11, a storage section 12, a communication section 13, an operation section 14, and a display section 15.

The control section 11 controls the entire information processing apparatus 10. The control section 11 can be configured to include, for example, an arithmetic processing device, a working memory, and a storage device that stores a control program, parameters, and the like. The arithmetic processing device can be a central processing unit (CPU), a graphics processing unit (GPU), or the like. The control section 11 can also be configured as a system on a chip (SoC). As can be seen from these examples, the control section 11 is configurable to store the control program in an executable state. However, the control section 11 is also configurable to store a part of the control program as a circuit configuration such as a field-programmable gate array (FPGA) or is configurable as a dedicated circuit.

The above-described control program can include a program for the arithmetic processing device to execute processing related to printing in cooperation with the storage section 12, the communication section 13, the operation section 14, and the display section 15. The above-described control program can include an operating system (OS) 16. Since the OS 16 is an OS installed in the information processing apparatus 10, the OS is of a type corresponding to the model or the like of the information processing apparatus 10. Although an example in which at least a part of the control program is stored in the storage section 12 provided separately from the control section 11 will be described in FIG. 1, the storage section 12 may be a part of a storage device in the control section 11. In other words, the storage section 12 can also be regarded as a part of the control section 11.

The storage section 12 is, for example, a storage device such as a hard disk drive, a solid state drive, or another memory. As a part of the control program, a general-purpose printer driver 16d and a vendor support application program 17 are stored in the storage section 12 in a state of being executable by the control section 11. The general-purpose printer driver 16d can be a part of the OS 16. In addition, an application program 18 for generating and editing a document file or the like is stored as a part of the control program in the storage section 12 in a state of being executable by the control section 11. In FIG. 1 and the following description, the vendor support application program will be abbreviated as a vendor support app, and the application program will be abbreviated as an app. Furthermore, the storage section 12 can store various kinds of data such as data of a file to be printed.

The communication section 13 is a section that is compatible with various mobile communication standards and predetermined communication standards such as Wi-Fi (registered trademark; the same applies to the following description) and communicates with an external apparatus in a wireless or wired manner via the network N1. In the printing system 100, the external apparatus includes the printer A(31), the printer B(32), and the printer C(33). The communication section 13 can be made of one or more communication interfaces capable of performing such communication. The communication interfaces are, for example, antennas or cable connectors. The network N1 is typically a local area network (LAN). Note that although an example in which the printing system 100 connects each apparatus via one network N1 is given for the sake of simplicity of description, a network via which communication with a certain printer is performed and a network via which communication with another printer is performed may be different.

The operation section 14 is a section that receives an operation performed by a user of the information processing apparatus 10 and can also be referred to as an operation receiving section. The operation section 14 can be implemented by, for example, any one or more of a physical button, a touch panel mounted on the display section 15, a pointing device, and a keyboard. In a configuration in which the operation section 14 includes a touch panel, the display section 15 and the touch panel may be collectively referred to as an operation panel of the information processing apparatus 10.

The display section 15 is a section for displaying a user interface (UI) image for operating the information processing apparatus 10 and is configured by a display device such as a liquid crystal display or an organic electroluminescence display, for example. The display section 15 may be configured to include a display and a drive circuit for driving the display.

The general-purpose printer driver 16d will be described. The general-purpose printer driver 16d is an OS standard printer driver included in the OS 16 or attached to the OS 16 included in the control program. The general-purpose printer driver 16d can be a program capable of controlling various types of printers and causing the printers to execute printing. Note that the general-purpose printer driver 16d can also be referred to as an OS general-purpose printing program or a general-purpose printing program.

The general-purpose printer driver 16d is a driver that uses a general-purpose protocol for searching for a printer and performing printing. The general-purpose printer driver 16d uses mDNS/DNS-SD for searching for a printer and uses IPP for performing printing by the printer, for example. Here, DNS is an abbreviation for Domain Name System. mDNS is an abbreviation for multicast DNS. DNS-SD is an abbreviation for DNS Service Discovery. IPP is an abbreviation for Internet Printing Protocol.

As can be seen from this example as well, the general-purpose printer driver 16d can be, for example, an IPP Class driver. IPP is an example of a standard protocol for controlling printer management and printing. IPP acquires and controls information on printers using POST requests and responses of Hypertext Transfer Protocol (HTTP). Using IPP, printer settings and printer state acquisition can be made. Here, use of HTTP Secure (HTTPS) instead of HTTP enables secure communication. In addition, the general-purpose printer driver 16d may be a Microsoft Universal Print Driver. Here, Microsoft is a registered trademark.

The vendor support app 17 will be described. The vendor support app 17 is an application program that supports the general-purpose printer driver 16d and is used to extend functions of the general-purpose printer driver 16d. Therefore, the general-purpose printer driver 16d can have functions of activating the vendor support app 17 and transmitting a print job to the vendor support app 17. The vendor support app 17 can be, for example, a Print Support Application (PSA). Note that one print job indicates an instruction for a series of operations for printing one or more printed matters and includes print data and print settings. In a case where a plurality of printed matters are printed, one print job can indicate an instruction for a series of operations for printing printed matters with the same print content.

The vendor support app 17 can be a program for supporting the general-purpose printer driver 16d and causing a computer to execute print control suitable for performance of a target printer, that is, print control for supporting functions unique to the printer. The computer mentioned here indicates the information processing apparatus 10 or the control section 11. In a case where a print job is acquired from the general-purpose printer driver 16d, the vendor support app 17 can convert the print job so that printing using functions unique to the designated printer can be executed by the printer.

In the present embodiment, the vendor support app 17 has a function of performing edge processing as an extended function. The vendor support app 17 is an application program provided by a vendor of the printer or the like. The vendor support app 17 can be provided to the user of the information processing apparatus 10 by being released to the public in an application store or the like of a provider of the OS, for example. Alternatively, the vendor support app 17 can be provided to the user by being included in or attached to the OS. The vendor support app 17 may be activated by the general-purpose printer driver 16d or may be activated without using the general-purpose printer driver 16d.

For the above-described edge processing, the vendor support app 17 includes a print control program described below. In other words, the print control program can also be implemented as, for example, a PSA. The print control program is a print control program which extends the general-purpose printer driver 16d, and is a program which causes a computer to execute acquisition processing, conversion processing, and edge processing as will be described below. The computer mentioned here also indicates the information processing apparatus 10 or the control section 11. Although each process will be described below using an example in which a printer as a target of a print instruction is the printer A(31), the same applies to the printer B(32) and the printer C(33).

The acquisition processing is processing of acquiring a spool file output from the general-purpose printer driver 16d. The spool file is a file that stores data in a spool format such as an XPS format or a PDF format. XPS is an abbreviation for eXtensible Markup Language (XML) Paper Specification. PDF is an abbreviation for Portable Document Format. The conversion processing is processing of converting a spool file into print image data in a raster format.

The edge processing can refer to processing of reducing the amount of ink in an edge portion, such as thinning, line shaving, or color lightening, that is, processing of correcting the edge portion so as to reduce the amount of ink. Then, the edge processing is executed on the spool file that is acquired by the acquisition processing and is to be subjected to the conversion processing. Alternatively, the edge processing may be executed on the print image data after being converted by the conversion processing, and this example will be described as a second embodiment.

Although the general-purpose printer driver 16d such as an OS-standard printer driver does not support the above-described edge processing, the above-described configuration enables the edge processing in an environment in which print processing is performed using a general-purpose printer driver according to the present embodiment. As described above, in the present embodiment, it is possible to execute the edge processing of detecting a boundary portion of a drawing included in print data inside the support app 17 at the time of printing and performing correction according to, for example, the amount of ink bleeding on paper in the printing using the general-purpose printer driver 16d. Therefore, in the present embodiment, it is possible to suppress ink bleeding.

The print control program according to the present embodiment has been mainly described above. In other words, in the present embodiment, it is possible to provide a print control method including the above-described acquisition processing, conversion processing, and edge processing which are executed by the computer as the extended functions of the general-purpose printer driver 16d. The print control method can also be regarded as a method of performing edge processing as a part of print control and can thus be referred to as an edge processing method.

In yet other words, the information processing apparatus 10 includes, in addition to the general-purpose printer driver 16d, an acquisition processing section, a conversion processing section, and an edge processing section as follows. The information processing apparatus 10 may be referred to as a print control apparatus or an edge processing apparatus.

The acquisition processing section acquires a spool file output from the general-purpose printer driver 16d. The conversion processing section converts the spool file into print image data in a raster format. The edge processing section executes edge processing on the spool file acquired by the acquisition processing section and to be subjected to the conversion processing by the conversion processing section.

### Outline of Processing Example of Information Processing Apparatus 10

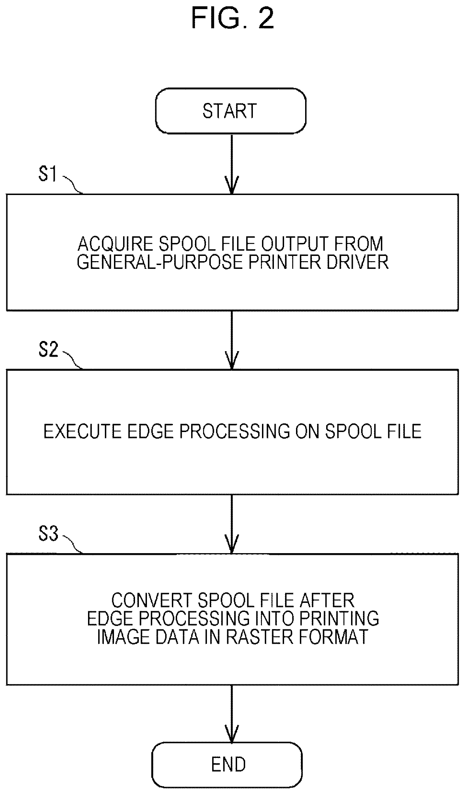

An outline of a processing example of the information processing apparatus 10 will be briefly described with reference to FIG. 2. FIG. 2 is a flowchart for explaining the processing example of the information processing apparatus 10.

First, the information processing apparatus 10 acquires a spool file output from the general-purpose printer driver 16d (Step S1). Next, the information processing apparatus 10 executes edge processing on the acquired spool file (Step S2). Next, the information processing apparatus 10 converts the spool file after the edge processing into print image data in the raster format (Step S3) and ends the processing.

### Specific Processing Example of Information Processing Apparatus 10

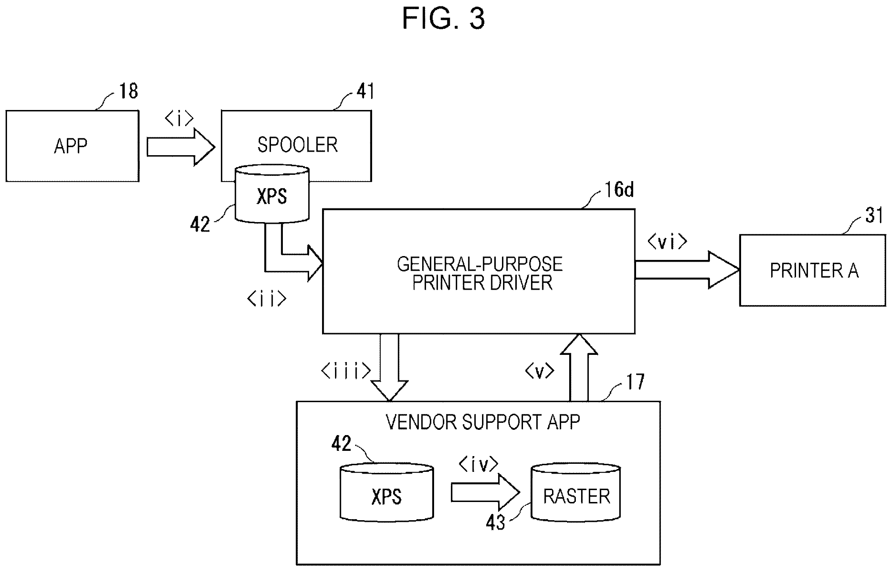

Next, a more specific example of the processing example of the information processing apparatus 10 described above will be described using FIG. 3. FIG. 3 is a schematic block diagram for explaining a processing example in the printing system 100. An example in which the print control program for performing the above-described acquisition processing, conversion processing, and edge processing is installed in the vendor support app 17 will be described below as well.

As illustrated in FIG. 3, an app 18 passes a print target file to a spooler 41 (i). It is only necessary for the spooler 41 to be included in the information processing apparatus 10, for example, in the OS 16. The spooler 41 converts the received print target file into a spool file 42 such as an XPS format file, saves the spool file 42, and passes the saved spool file 42 to the general-purpose printer driver 16d (ii).

The general-purpose printer driver 16d passes the received spool file 42 to the vendor support app 17 as it is (iii). The vendor support app 17 performs edge processing on a necessary edge region by, for example, extracting an object from the spool file 42, and converts the spool file 42 into print image data 43 such as raster data (iv).

Here, the object may indicate a pattern, a character, or the like. The pattern may be, for example, an image of a line, a rectangle, a circle, or another shape, or may include a plurality of types thereof. The spool file includes attribute information indicating attributes of such an object. Therefore, it is possible to select each object as a correction target of the edge processing, and to perform correction for adjusting the size of a character, the thickness of a line, the enlargement ratio of a pattern, and the like. In the edge processing, it is possible to convert only a portion of the target object into print image data in the raster format, to perform region detection processing of detecting a boundary region on the image, and to perform correction by trimming a found boundary pixel.

Next, the vendor support app 17 converts the print image data 43 into a printer command for the printer A(31) and returns the printer command to the general-purpose printer driver 16d (v). The general-purpose printer driver 16d transmits the received printer command to the printer A(31) (vi). The printer A(31) that has received the printer command executes printing and generates a printed matter.

As described above, the print control program described as being included in the vendor support app 17 can include a program that causes a computer to execute the following transmission processing. The transmission processing is processing of converting the print image data, which has been subjected to the edge processing and has been converted by the conversion processing, into a printer command and transmitting the printer command to the general-purpose printer driver 16d.

The vendor support app 17 may convert the print image data into a printer command in a unique format and transmit the printer command directly to the printer A(31) without using the general-purpose printer driver 16d. In a case where the printer A(31) is compatible, the vendor support app 17 may transmit the print image data directly to the printer A(31) without converting the print image data into the printer command.

In addition, in a case where the edge processing is executed on the spool file which is acquired by the acquisition processing and is to be subjected to the conversion processing, the print control program may include a program which causes the computer to execute the following selection processing. The selection processing is processing of selecting at least one of a predetermined object and a predetermined color to be subjected to the edge processing in the spool file. As described above, since the spool file includes the attribute information, it is possible to extract only a character and perform the edge processing only on the boundary of the edge region of the extracted character, or to extract only a pattern and perform the edge processing only on the boundary of the edge region of the pattern, for example, in the selection processing.

In the selection processing, a barcode region indicating a one-dimensional or two-dimensional barcode, for example, can be extracted, and the edge processing can be performed only on the boundary of the region. Note that in a case of a one-dimensional barcode, the vendor support app 17 of the information processing apparatus 10 may set a barcode flag for pixels of a line segment portion in the barcode region detected in this way and transmit the barcode flag to the printer A(31). The printer A(31) that has received such print image data or a printer command can perform printing with a reduced amount of ink in the designated region designated by the barcode flag, thereby suppressing ink bleeding. By such processing, reading accuracy of the one-dimensional barcode included in the printed matter can be improved.

The above-described extraction of an object can be easily realized in a spool file in the XPS format or the like. Therefore, the information processing apparatus 10 can extract an edge region on an object basis before conversion into print image data and perform edge processing on a necessary region more easily and with less processing load than extraction processing from print image data, by performing the edge processing on the spool file. Here, the necessary region can refer to, for example, a region determined in advance for the edge region.

Furthermore, the above-described selection processing can be performed on the basis of a default setting, on the basis of a determination result obtained by determining the type or content of an image by a predetermined algorithm, or on the basis of user selection. The predetermined algorithm may be a learning model that has been subjected to machine learning so as to specify, on an image, an edge region that requires the edge processing as described above.

In a case where the selection is performed on the basis of user selection, the print control program may include a program that causes the computer to execute processing of displaying a UI image.

Further, the print control program can also include a program that causes the computer to execute display processing of displaying a print preview image. The print preview image may be generated as an image having a resolution lower than that of the print image data described above. In this case, the above-described selection processing may include processing of receiving, from the user, a selection operation of selecting at least one of the predetermined object and the predetermined color in a state where the print preview image is displayed, and the target of the edge processing may be selected on the basis of the selection operation. This allows the user to select a region or an object to be subjected to the edge processing while checking the preview image.

In addition, the UI image may be a UI image that enables the user to perform a dedicated setting such as to "suppress bleeding of the character outline" or to "suppress bleeding of the barcode", for example. In addition, the UI image may be, for example, a UI image for causing the user to select a color that the user desires to subject to the edge processing from only black, black including gray, and all colors, for example. The UI image in this case may be a UI image that enables a dedicated setting for suppressing bleeding of an outline of the selected color such as to "suppress bleeding of a black outline", for example, to be performed.

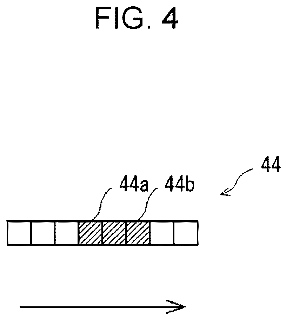

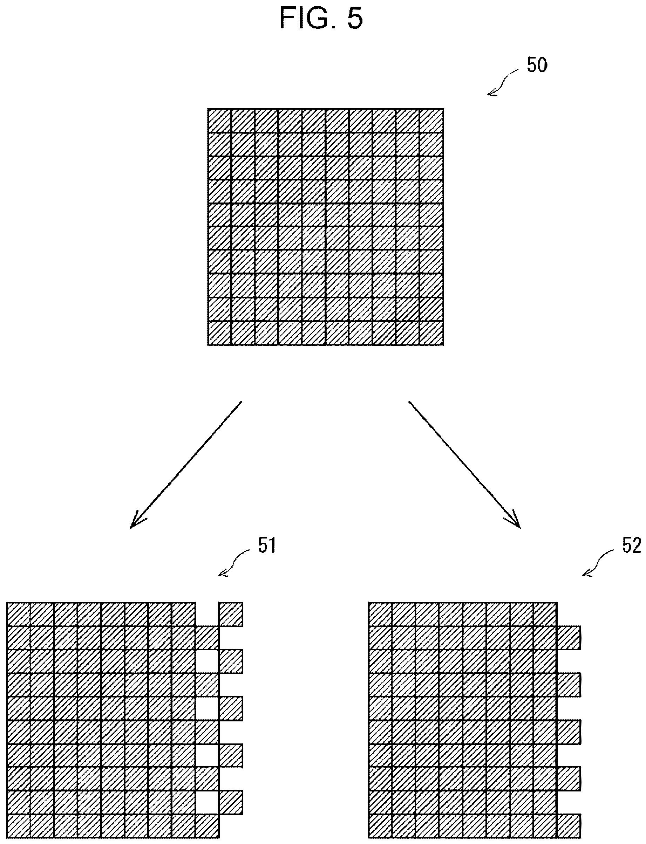

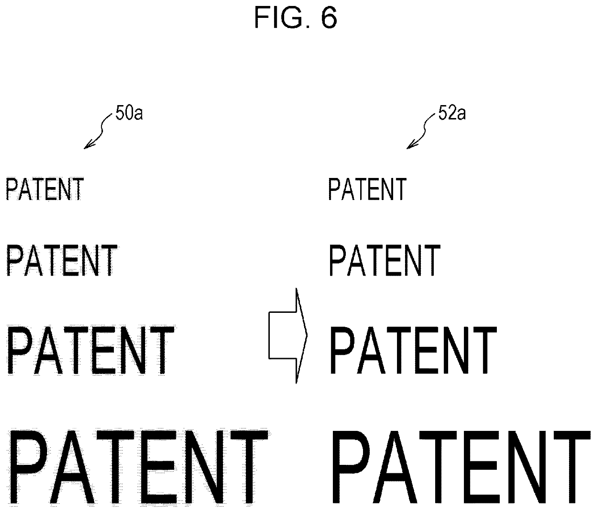

Next, an example of the edge processing will be described using FIGS. 4 to 6. FIG. 4 is a schematic diagram for explaining the boundary detection processing in the processing example of FIG. 3. FIG. 5 is a schematic diagram for explaining two examples of the edge processing in the processing example of FIG. 3. FIG. 6 is a diagram illustrating print examples before and after the edge processing is performed in the processing example of FIG. 3.

As the edge processing, processing of trimming a boundary region on print image data is exemplified. In the present embodiment, the boundary region may be trimmed from the spool file so that print image data after such region reduction processing is executed can be obtained through conversion.

In the boundary detection processing of detecting a boundary, an object to be subjected to the edge processing is converted into a raster image represented by raster data, pixels of the raster image are scanned, and pixels serving as a boundary can thus be determined from a change in color and continuity, for example. To be more specific, in the case of the example in which the arrow direction is the scanning direction, the arrangement of the pixels in the horizontal direction is indicated by the reference numeral 44, and the correction target is one dot as illustrated in FIG. 4, a black pixel 44a and a black pixel 44b can be detected by regarding the pixels at the boundary as the boundary. Furthermore, a learning model obtained by machine learning may be used for the above-described boundary detection processing.

In a case where the edge processing is performed on a barcode, the vendor support app 17 may execute processing of detecting a one-dimensional or two-dimensional barcode region and a boundary of the region at the timing of the region detection processing as described above.

Alternatively, the vendor support app 17 can cause the user to designate the boundary by a setting on the UI image. In this case, the user can roughly designate a boundary to be subjected to the edge processing while checking the boundary on the preview image, by applying the above-described example in which the preview image is checked at the same time.

Of course, the color as a target of the boundary detection is not limited to black. The color as a target of the boundary detection may be a predetermined color, such as a default color or a user-selected color. As a result, the vendor support app 17 can narrow down a range of correction in the edge processing only to the boundary of the predetermined color.

The region reduction processing can be, for example, processing of changing the color of the boundary pixels to white. In addition, the number of pixels to be trimmed in the region reduction processing can be variable. As a first example, the vendor support app 17 can allow the user to designate the number of pixels to be trimmed in the setting on the UI image. In this case, the user can designate the number of pixels to be trimmed while checking rough content of the edge processing on the preview image, by applying the above-described example in which the preview image is checked at the same time.

In a case where a right end side of a region 50 illustrated in FIG. 5 is detected as the boundary region, the region 50 can be trimmed so as to thin out every other pixel in 2-dot column at the boundary as illustrated as a region 51. Alternatively, in a case where the right end side of the region 50 is similarly detected as the boundary region, the region 50 can be trimmed so as to trim one column at the end in the two-dot column at the boundary and thin out every other pixel of the adjacent column as illustrated as the region 52.

As a second example, the vendor support app 17 may assume the amount of ink at the boundary portion from the thickness, color, density, and the like of the target object in the spool file and automatically change the number of pixels to be trimmed. For this change, a learning model subjected to machine learning may be used.

An example of a result obtained by performing the region reduction processing on the character group 50a of FIG. 6 in accordance with the first example or the second example is illustrated in the character group 52a of FIG. 6. In a character group 52a, edge processing is performed on a character group 50a, and pixels are reduced in the vicinity of the boundary with a white background portion for each character of the character group 50a, thereby reducing bleeding. As a result, even in a printing environment in which the general-purpose printer driver 16d is used, it is possible to execute printing with the same thickness and quality as those in screen display while suppressing ink bleeding in the present embodiment.

It should be noted that although both the methods of the first example and the second example can be executed only on the information processing apparatus 10 side, the methods may be executed only on the printer A(31) side, or the respective processes may be shared and performed by the information processing apparatus 10 and the printer A(31) instead.

As described above, the region to be corrected and the amount of correction such as the number of pixels to be trimmed in the boundary detection processing and the region reduction processing are automatically performed, so that it is possible to reduce the time and effort of the user. As for the amount of correction, the amount of correction in accordance with complexity, color density, and density of the print image data may be automatically determined. The boundary detection processing and the region reduction processing may be executed using one or more learning models.

Furthermore, the object to be detected, the boundary color, and the correction method in the above-described boundary detection processing may be selected in combination according to the processing capability of at least one of the information processing apparatus 10 and the printer A(31). The information processing apparatus 10 can acquire the processing capacity of the printer A(31) from the printer A(31) through IPP communication by the general-purpose printer driver 16d or communication of a unique protocol by the vendor support app 17.

In addition, although the processing of performing a change to white pixels has been described as an example of the region reduction processing, processing of reducing the amount of ink to be ejected may be employed instead. By lowering the ink density of the pixels at the boundary in this way, it is possible to make bleeding less likely to occur.

In addition, the region reduction processing may be processing of reducing the ink density of the pixels at the boundary by assuming the amount of bleeding in advance, may be processing of thinning out the pixels onto which the ink is discharged as described above, or may include both of the processes.

### Effects of Present Embodiment

As described above, according to the embodiment, it is possible to perform the edge processing, to suppress ink bleeding, and to execute printing with the same thickness and quality as those of the screen display in an environment in which print processing using the general-purpose printer driver 16d is performed with the above-described configuration. In other words, it is possible to obtain, as a print result, a printed matter having the same quality as that of the image displayed on the screen without changing the appearance, impression, and layout in the original print target file as much as possible in the present embodiment. Furthermore, the present embodiment can be configured such that the color after correction and the amount of correction are selected by the user or as a default. Therefore, according to the present embodiment, it is possible to adopt a configuration in which an optimal setting can be selected in accordance with the paper type or the content of the print target file, for example. On the other hand, the general-purpose printer driver 16d such as an OS-standard printer driver does not support the above-described edge processing.

In order to supplement the description of such effects, first to third comparative examples will be described. In the first comparative example, print processing including edge processing is executed by a unique printer driver provided by a vendor of the printer, that is, a printer manufacturer. In the first comparative example, bleeding cannot be corrected in an OS environment of Windows (registered trademark) Protected Print Mode, for example, in which an OS standard printer driver is used, and like the character group 50a of FIG. 6, for example, characters are printed to be thicker than those in the image on the display screen. On the other hand, in the present embodiment, the vendor support app 17 operates within a range of specifications defined by the OS in cooperation with the OS standard general-purpose printer driver 16d within the range of the OS specifications, and the edge processing as described above can thus be appropriately executed.

In the second comparative example, detection processing and replacement with a correction image are performed only for a barcode and an improvement in reading accuracy thereof, and print processing is executed. In the second comparative example, a character, a thin line, or the like other than the barcode is printed with a thickness different from that in an image on the display screen, and a printed matter in which an appearance and impression of the original print target file are changed is generated. On the other hand, in the present embodiment, the vendor support app 17 can extract a boundary portion in data, such as a dot where a color changes from white to another color, regardless of a character, an image, or the like from print image data generated by the vendor support app 17 itself and perform correction for precise printing. Therefore, in the present embodiment, it is possible to suppress generation of a printed matter in which an appearance and impression of the original print target file are changed as in the second comparative example.

In the third comparative example, in order to improve quality after printing, an alternative image obtained by correcting an original image is generated, and print processing is executed. In the third comparative example, due to replacement of data of the original image, the size of an object such as a barcode, for example, is largely changed, and an appearance of a print result may be changed, the print result may be different, or a layout of the original image may be messed up in the print result. On the other hand, in the present embodiment, the correction in the edge processing can be executed without changing the appearance as much as possible, and the edge processing can be executed by correcting the data of the original image without replacing the data of the original image. For example, in the present embodiment, the setting of the number of pixels to be trimmed can be realized by the above-described method of the first example, the method of the second example, or a method combining these two methods.

In addition, in the present embodiment, object-based correction can be performed by adopting a configuration in which an object to be corrected can be selected. Furthermore, in the present embodiment, the boundary detection processing can be executed on an object basis, and it is thus possible to reduce a load of detection processing even in a case where processing such as detection of a boundary region based on complexity of data is performed. In addition, since print image data such as data after raster conversion becomes image data having the same size as the paper size of the printer A(31), the number of pixels dramatically increases as the size increases, and required processing capability such as a data processing speed or the memory amount in the processor of the information processing apparatus 10 or the printer A (31) increases. However, in the present embodiment, the edge processing is executed on the spool file, and it is thus possible to reduce the processing capability necessary for the processor, that is, to reduce a load of the processor.

### Second Embodiment

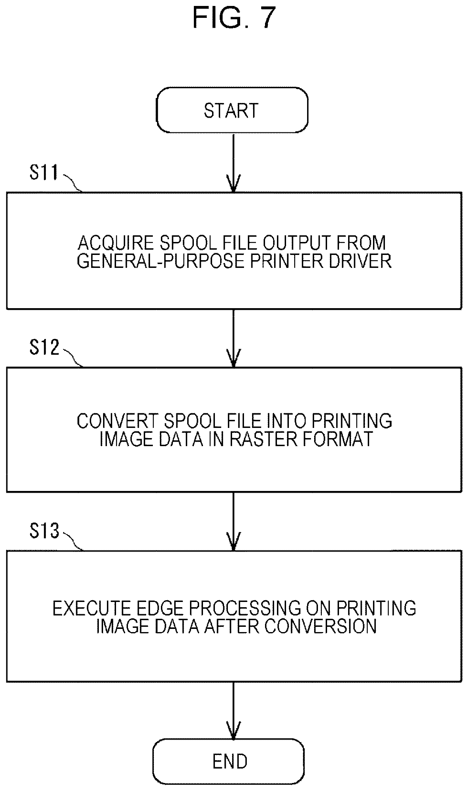

As a second embodiment, another processing example in an information processing apparatus 10 will be described with reference to FIG. 7. FIG. 7 is a flowchart for explaining another processing example of an information processing apparatus according to the second embodiment. Since a printing system according to the present embodiment is obtained by partially changing the processing in the printing system 100 in FIG. 1, the configuration thereof will be described using FIG. 1, and various examples described in the first embodiment can be applied. Hereinafter, a processing example of the information processing apparatus 10 according to the present embodiment will be briefly described.

### Outline of Processing Example of Information Processing Apparatus 10

First, the information processing apparatus 10 acquires a spool file output from a general-purpose printer driver 16d (Step S11). Next, the information processing apparatus 10 converts the acquired spool file into print image data in a raster format (Step S12). Next, the information processing apparatus 10 executes edge processing on the converted print image data (Step S13) and ends the processing.

The edge processing in the present embodiment is different from the edge processing in the first embodiment in that the target of the edge processing is image data of all contents of a print target file. Although other details are as described in the first embodiment, and the description thereof is omitted, the various application examples described in the first embodiment can also be applied.

However, in the present embodiment, the print control program described as being included in the vendor support app 17 can include, as transmission processing, processing of converting the print image data converted in the conversion processing and subjected to the edge processing into a printer command and transmitting the printer command to the general-purpose printer driver 16d.

Note that the vendor support app 17 may convert the print image data into a printer command in a unique format and transmit the printer command directly to a printer A(31) without using the general-purpose printer driver 16d in this example as well. In a case where the printer A(31) is compatible, the vendor support app 17 may transmit the above-described print image data directly to the printer A(31) without converting the print image data into the printer command.

### Effects of Present Embodiment

Even the printing system 100 according to the present embodiment exhibits similar effects although a smaller processing load is required in the first embodiment because the edge processing is performed on the converted print image data.

### Third Embodiment

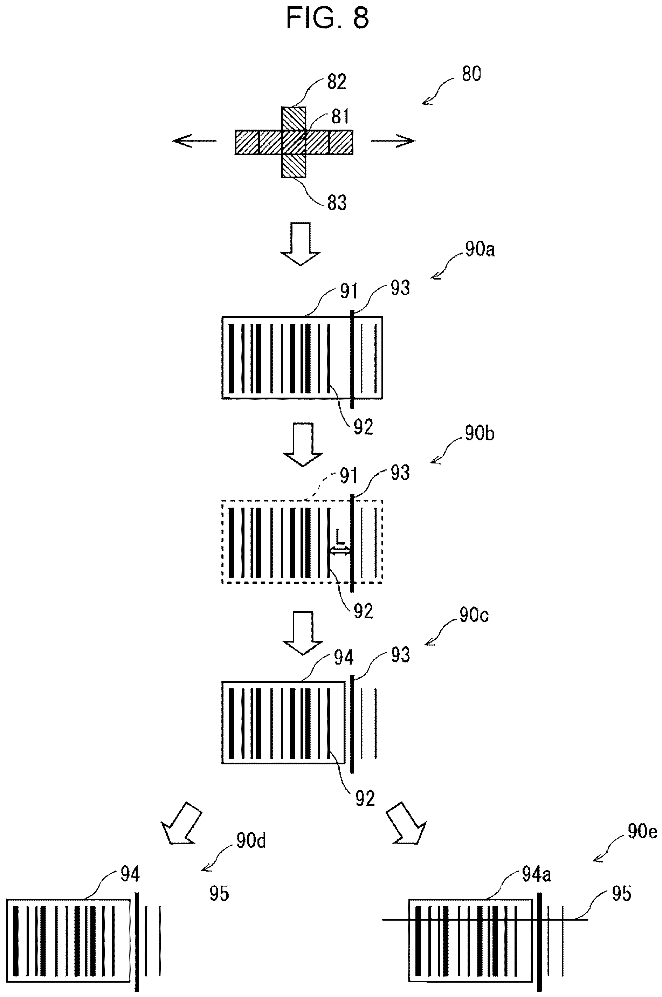

As a third embodiment, another processing example in an information processing apparatus 10 will be described using FIG. 8. FIG. 8 is a schematic diagram for explaining a processing example in an information processing apparatus according to the third embodiment.

In the first embodiment, an example has been described in which, at the time of edge processing, only a portion corresponding to a target object is converted into print image data in the raster format, region detection processing of detecting a boundary region on the image is performed, and correction is performed by trimming found boundary pixels.

On the other hand, a vendor support app 17 in the present embodiment executes, instead of such region detection processing, processing of detecting a one-dimensional or two - dimensional barcode region and a boundary of the region to thereby improve detection accuracy of the barcode. Then, the vendor support app 17 may recognize information indicated by the barcode detected by the vendor support app 17 itself or a barcode reading app.

Although an example of a one-dimensional barcode will be described below, processing can also be performed on the basis of a similar idea even in a case of a two-dimensional barcode. However, the present embodiment can be similarly applied to print image data in the raster format obtained by converting an entire print target file as described in the second embodiment, and can also be similarly applied to general image data. For this reason, the present embodiment will be described below by exemplifying image data corresponding to one page at the time of printing. For the same reason, it is possible to state that various application examples such as the boundary detection processing in the first and second embodiments can be applied to the third embodiment as well.

First, the vendor support app 17 saves image data corresponding to one page of paper to be subjected to edge processing. Next, the vendor support app 17 divides colors in the image data into bright portions and dark portions using a predetermined threshold value, converts the dark portions into black and the bright portions into white, and binarizes the image data.

Next, the vendor support app 17 detects a one-dimensional barcode region from the image data by executing barcode position detection processing as follows. The barcode position detection processing can mainly include extraction processing of extracting all line segments on the page and grouping processing of grouping the line segments found by the extraction. Furthermore, the barcode position detection processing can include first checking processing of checking the distances between the line segments, second checking processing of checking the number of line segments, and third checking processing of checking the presence of orthogonal line segments.

The extraction processing will be briefly described by exemplifying an image including a pixel group 80 illustrated in FIG. 8. In the extraction processing, the vendor support app 17 first searches for black pixels included in the image. A case where a pixel 81 is found as a black pixel will be described. The vendor support app 17 executes edge detection, including both sides (not illustrated) of dots 82 and 83 above and below the found pixel 81, and checks whether or not the found pixel 81 corresponds to a boundary of a line segment. In a case where the found pixel 81 corresponds to a boundary, that is, an edge, the vendor support app 17 checks the number of continuous black pixels in the vertical direction with respect to the directions of the barcode indicated by the double-head arrows in FIG. 8. Then, the vendor support app 17 determines whether or not the number of continuous black pixels is equal to or greater than a minimum line segment length, such as about 3 mm, for example, and if it is equal to or greater than the minimum line segment length, the vendor support app 17 regards it as a line segment. The processing is repeated twice in the horizontal direction and the vertical direction. Although the example of the line segment extraction in the horizontal direction has been described by exemplifying the pixel group 80, line segment extraction in the vertical direction can also be performed by a similar method.

In the grouping processing, the vendor support app 17 determines a reference line segment such as a line segment facing a predetermined direction with respect to the found line segment, and groups line segments with coordinates of both ends falling within a range 91 of a threshold value of the reference numeral 90a. For example, line segments included in the range 91, such as the line segment 92 and portions other than the upper and lower end portions of the line segment 93, are to be grouped. If there are line segments outside the range 91, for example, the upper end portion and the lower end portion of the line segment 93 and other line segments, which are not illustrated, the vendor support app 17 excludes the line segments.

In the first checking processing, the vendor support app 17 checks the distances between the line segments. Specifically, if the thickness of each of the grouped line segments or the distance L between adjacent line segments indicated by the reference numeral 90b is equal to or greater than a maximum value, for example, about 5 mm, the vendor support app 17 regards the barcode as another barcode. For example, in a case where L > 5 mm, the line segment 93 is regarded as another barcode.

In the second checking processing, if the number of line segments included in the region 94 of the target range of the reference numeral 90c is equal to or greater than the minimum number of line segments, for example, equal to or greater than twelve, the vendor support app 17 regards the region 94 of the range as a candidate region for the barcode region. Hereinafter, the candidate region will be described as a candidate region 94.

In the third checking processing, the vendor support app 17 checks whether or not there are orthogonal line segments in the candidate region 94. Specifically, the vendor support app 17 determines whether or not line segments orthogonal to the found candidate region 94 are present. In a case where there are no orthogonal components as indicated by the reference numerals 90c and 90d, for example, the vendor support app 17 regards the candidate region 94 as a barcode. On the other hand, in a case where there are components 95 orthogonal to the candidate region 94a as indicated by the reference numeral 90e, for example, the vendor support app 17 excludes the candidate region 94a from the barcode.

### Effects of Present Embodiment

As described above, according to the present embodiment, detection accuracy of a barcode included in image data can be improved.

### Other Modifications

The present disclosure is not limited to the above-described embodiments and can be appropriately modified without departing from the gist. For example, the system configuration of the printing system, the configuration of each apparatus constituting the printing system, the configuration of each program included in each apparatus, the processing procedure of each apparatus, and the like are not limited to those illustrated.

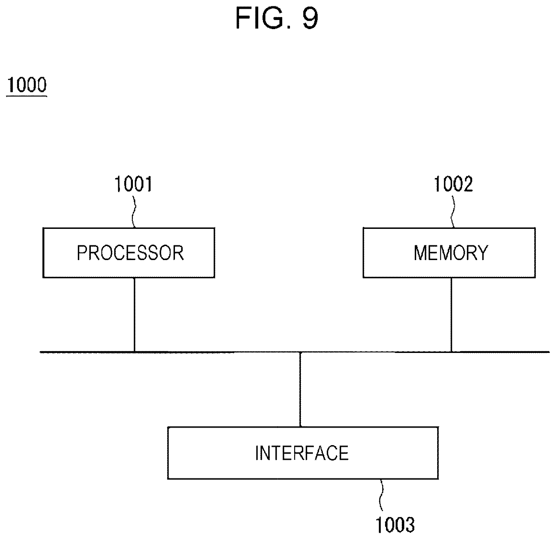

Furthermore, each of the apparatuses included in the printing system according to the above-described embodiments may have, for example, the following hardware configuration. Here, examples of each of the apparatuses include the information processing apparatus and each printer in the example of FIG. 1. FIG. 9 is a diagram illustrating an example of the hardware configuration of each apparatus.

An apparatus 1000 illustrated in FIG. 9 can include a processor 1001, a memory 1002, and an interface 1003. The interface 1003 may include, for example, a communication interface and an interface with an input/output device or the like, which are necessary depending on the apparatus.

The processor 1001 may be, for example, a CPU, a GPU, a micro processor unit (MPU) which is also referred to as a microprocessor, or the like. The processor 1001 may include a plurality of processors. The memory 1002 is configured by, for example, a combination of a volatile memory and a nonvolatile memory. The functions of each apparatus are implemented by the processor 1001 reading a program stored in the memory 1002 and executing the program while exchanging necessary information via the interface 1003.

In addition, the above-described program includes a command group (or software code) for causing a computer to perform one or more of the functions described in the embodiments in a case where the program is read by the computer. The program may be stored in a non-transitory computer-readable medium or a tangible storage medium. By way of non-limiting examples, the computer-readable medium or the tangible storage medium includes a random-access memory (RAM), a read-only memory (ROM), a flash memory, a solid-state drive (SSD), and other memory technologies. Also, by way of non-limiting examples, the computer-readable medium or the tangible storage medium includes a CD-ROM, a digital versatile disc (DVD), a Blu-ray (registered trademark) disc, and other optical disc storages, a magnetic cassette, a magnetic tape, a magnetic disk storage, and other magnetic storage devices. The program may also be transmitted on a transitory computer-readable medium or a communication medium. By way of non-limiting examples, the transitory computer-readable medium or the communication medium includes propagated signals in electrical, optical, acoustical, or other forms. Furthermore, the program is included in a program product.

Although the present disclosure has been described with reference to the above-described embodiments, the present disclosure is not limited only to the configurations described in the above-described embodiments, and it goes without saying that the present disclosure includes various modifications, corrections, and combinations that can be made by those skilled in the art within the scope of the claims of the present application.

## Claims

1. A non-transitory computer-readable storage medium storing a print control program for extending an OS general-purpose printing program, the print control program causing
a computer to execute:
acquisition processing of acquiring a spool file output from the OS general-purpose printing program;
conversion processing of converting the spool file into print image data in a raster format; and
edge processing,
wherein the edge processing is executed on either the spool file acquired in the acquisition processing and to be subjected to the conversion processing or the print image data converted in the conversion processing.

2. The non-transitory computer-readable storage medium according to claim 1,
wherein the print control program is implemented as a Print Support Application.

3. The non-transitory computer-readable storage medium according to claim 1,
wherein the print control program includes a program that causes the computer to execute transmission processing of converting the print image data subjected to the edge processing and converted in the conversion processing or the print image data converted in the conversion processing and subjected to the edge processing into a printer command and transmitting the printer command to the OS general-purpose printing program.

4. The non-transitory computer-readable storage medium according to claim 1,
wherein the edge processing is executed on the spool file acquired in the acquisition processing and to be subjected to the conversion processing, and
the print control program includes a program that causes the computer to execute selection processing of selecting at least one of a predetermined object and a predetermined color as a target to be subjected to the edge processing in the spool file.

5. The non-transitory computer-readable storage medium according to claim 4,
wherein the print control program includes a program that causes the computer to execute display processing of displaying a print preview image, and
the selection processing includes processing of receiving a selection operation of selecting at least one of the predetermined object and the predetermined color from a user in a state where the print preview image is displayed, and the target to be subjected to the edge processing is selected based on the selection operation.

6. An information processing apparatus comprising:
an OS general-purpose printing program;
an acquisition processing section that acquires a spool file output from the OS general-purpose printing program;
a conversion processing section that converts the spool file into print image data in a raster format; and
an edge processing section,
wherein the edge processing section executes edge processing on either the spool file acquired by the acquisition processing section and to be subjected to conversion processing by the conversion processing section or the print image data converted by the conversion processing section.

7. A print control method comprising causing a computer provided with an OS general-purpose printing program to execute:
acquisition processing of acquiring a spool file output from the OS general-purpose printing program;
conversion processing of converting the spool file into print image data in a raster format; and
edge processing,
wherein the edge processing is executed on either the spool file acquired in the acquisition processing and to be subjected to the conversion processing or the print image data converted in the conversion processing.
